# EUROPÄISCHE PATENTSCHRIFT

(11) **EP 0 571 358 B1**
(45) Veröffentlichungstag und Bekanntmachung des Hinweises auf die Patenterteilung: **30.06.1999**
(21) Anmeldenummer: 93890101.4
(22) Anmeldetag: 17.05.1993
(51) Int. Cl.: C22B 5/14, C21B 13/00

(54) **Verfahren zur Direktreduktion von teilchenförmigem eisenoxidhältigen Material**
Process for the direct reduction of particulate material containing iron oxide
Procédé pour la réduction directe des matières en particules contenant de l'oxyde ferrique

(30) Priorität: 22.05.1992 AT 106692
(43) Veröffentlichungstag der Anmeldung: 24.11.1993
(73) Patentinhaber: VOEST-ALPINE INDUSTRIEANLAGENBAU GMBH, 4020 Linz (AT); Brifer International Ltd., Bridgetown (BB)
(72) Erfinder: Czermak, Karl, Dipl.-Ing., A-4470 Enns (AT); Milionis, Konstantin, Dipl.-Ing., A-8413 St. Georgen a/d Stiefling 122 (AT); Schenk, Johannes Leopold, Dipl.-Ing., A-4040 Linz (AT); Zeller, Siegfried, Dipl.-Ing., A-4060 Leonding (AT); WHIPP, Roy Hubert Jr., Miami, Florida 33176 (US)
(74) Vertreter: Kopecky, Helmut, Dipl.-Ing. Kopecky & Schwarz Patentanwälte

(56) Entgegenhaltungen:
- DE-A- 2 526 737
- DE-A- 2 911 692
- US-A- 3 193 378
- US-A- 5 082 251

## Beschreibung

Die Erfindung betrifft ein Verfahren zur Direktreduktion von teilchenförmigem eisenoxidhältigem Material im Wirbelschichtverfahren, wobei reformiertes Gas mit bei der Direktreduktion des eisenoxidhältigen Materials entstehendem Topgas vermischt und als Reduktionsgas einer Wirbelschicht-Reduktionszone zugeführt wird und wobei die Direktreduktion von eisenoxidhältigem Material in mehreren in Serie hintereinander geschalteten Wirbelschicht-Reduktionszonen durchgeführt wird und das Reduktionsgas im Gegenstrom zum teilchenförmigen, eisenoxidhältigen Material von Reduktionszone zu Reduktionszone geführt wird, sowie eine Anlage zur Durchführung des Verfahrens.

Ein Verfahren dieser Art ist aus der US-A - 5,082,251 bekannt. Hierbei wird eisenreiches Feinerz in einem System von in Serie angeordneten Wirbelschichtreaktoren mit Hilfe von Reduktionsgas unter erhöhtem Druck reduziert. Das so erzeugte Eisenpulver wird anschließend einer Heiß- oder Kaltbrikettierung unterworfen.

Das Reduktionsgas wird durch katalytische Reformierung von entschwefeltem und vorgewärmtem Erdgas mit überhitztem Wasserdampf in einem konventionellen Reformerofen erzeugt. Das reformierte Gas wird anschließend auf ca. 425°C in einem Wärmetauscher abgekühlt. Anschließend wird durch CO-Konvertierung mit Hilfe eines Eisenoxid-Katalysators der H₂-Anteil im Reduktionsgas nach folgender Gleichung erhöht:

H₂O + CO = CO₂ + H₂

Anschließend wird das dabei entstehende sowie das vom Reformer stammende CO₂ in einem CO₂-Wäscher entfernt, so daß sich das Reduktionsgas aus über 90 % H₂, einem sehr geringen Anteil CO sowie CO₂, H₂O, N₂ und CH₄ zusammensetzt.

Dieses Gas wird mit dem nur teilweise verbrauchten Reduktionsgas (Topgas) vermischt, auf 850°C erhitzt und reduziert in drei Stufen (drei Reaktoren) im Gegenstrom das Feinerz.

Der Fluß des Erzes beginnt mit einer Trocknung und einer anschließenden Siebung. Sodann gelangt das Erz in einen Vorwärmereaktor, in dem Erdgas verbrannt wird. In drei folgenden Reaktoren wird das Feinerz unter erhöhtem Druck reduziert.

Bei diesem Verfahren weist das Reduktionsgas einen sehr hohen Anteil an H₂ auf, so daß die Reduktion der Feinerze hier ausschließlich über die Reaktion:

Fe₂O₃ + 3H₂ = 2Fe + 3H₂O - ΔH

erfolgt, die stark endotherm ist.

Diese stark endotherme Reaktion hat eine wesentliche Temperaturabsenkung in den Reaktoren zur Folge. Um dies zu verhindern, ist man bei dem bekannten Verfahren gezwungen, die spezifische Reduktionsgasmenge pro t Eisenschwamm beträchtlich über die thermodynamisch erforderliche Mindestgasmenge zu erhöhen. Darüber hinaus ist zur Vorwärmung des eisenoxidhältigen Materials eine Verfeuerung von Erdgas in einem eigenen Vorwärmreaktor erforderlich.

Die Erfindung bezweckt die Vermeidung dieser Nachteile und Schwierigkeiten und stellt sich die Aufgabe, die Betriebskosten, insbesondere die Energiekosten, beträchtlich zu reduzieren, beispielsweise um mehr als 30%.

Diese Aufgabe wird erfindungsgemäß dadurch gelöst, daß sowohl das Topgas als auch das reformierte Gas einer CO₂-Wäsche unterzogen werden, das Reduktionsgas auf einen H₂-Gehalt in einem Bereich zwischen 45 und 75%, vorzugsweise zwischen 50 und 65%, und einen CO-Gehalt in einem Bereich zwischen 8 und 35%, vorzugsweise zwischen 10 und 20%, eingestellt wird und zur Vorwärmung des eisenoxidhältigen Materials aus den nachgeordneten Wirbelschicht-Reduktionszonen stammendes Reduktionsgas durch die für das Material erste Wirbelschicht-Reduktionszone hindurchgeleitet wird. Hierbei wird die fühlbare Wärme des Abgases aus den nachgeordneten Reaktoren ohne Verbrennung eines Gases ausgenutzt. Diese Vorwärmung kann ein- oder mehrstufig stattfinden.

Erfindungsgemäß erfolgt die Reduktion des Feinerzes nicht ausschließlich über die oben zum Stand der Technik beschriebene stark endotherme Reaktion mit H₂, sondern zusätzlich über die Reaktion

Fe₂O₃ + 3CO = 2Fe + 3CO₂ + ΔH,

die exotherm ist. Hierdurch gelingt es, das chemische Potential des Reduktionsgases zur Senkung des Energiebedarfes heranzuziehen.

Das sich hierbei bildende CO₂ führt zu keinem Nachteil, da es erfindungsgemäß in einem CO₂-Wäscher, durch den das Topgas durchgeleitet wird, ausgewaschen wird. Die Reaktion von CO mit H₂ nach der Gleichung

CO + 3H₂ = CH₄ + H₂O

ist beim erfindungsgemäßen Verfahren nicht nachteilig, da das Methan nur in einer sehr geringen Konzentration gebildet wird, die keine Nachteile mit sich bringt.

Durch die erfindungsgemäße CO₂-Wäsche des Topgases gemeinsam mit dem reformierten Gas gelingt es, den CO-Gehalt des Reduktionsgases dahingehend zu optimieren, daß eine Reaktion mit CO stattfindet, also eine Neutralhaltung der Energiebilanz (gegenüber der Reaktion mit H₂, die endotherm ist) möglich ist, jedoch eine Zerstörung der das Gas leitenden Rohre aufgrund eines zu hohen CO-Gehalts zuverlässig verhindert wird.

Aus der DE-A- 25 26 737 ist ein Verfahren zur Reduktion von teilchenförmigem eisenoxidhältigem Material bekannt, bei dem jedoch Methan mit Sauerstoffin den Reaktorbehälter eingeleitet und dort teilweise verbrannt wird. Die Reduktionsgaserzeugung findet erst im Inneren des Reaktors statt, und zwar in einem Bereich zwischen vorletzter und letzter Reduktionsstufe. Der letzten Stufe des Reaktors wird über eine separate Leitung Topgas zugeleitet, das einer CO₂-Wäsche unterworfen wurde.

Gemäß einer bevorzugten Ausführungsform erfolgt erfindungsgemäß das Einstellen des H₂- und des CO-Gehaltes im Reduktionsgas durch die Betriebsweise eines Reformers, wobei gegenüber herkömmlichen Reformer-Betriebsweisen ein reduziertes Dampf/Erdgas-Verhältnis, das vorzugsweise zwischen 2,5 und 3,5 liegt, eingehalten wird. Hierdurch gelingt es, die Temperatur in der Reduktionszone im wesentlichen konstant zu halten.

Vorzugsweise wird das Reduktionsgas auf einen CH₄-Gehalt, der zwischen 8 und 35 % liegt, eingestellt.

Gemäß einer bevorzugten Ausführungsform wird das Reduktionsgas in der für das Reduktionsgas letzten Wirbelschicht-Reduktionszone einer Teilverbrennung durch Sauerstoffzufuhr unterzogen.

Um in allen Wirbelschicht-Reduktionszonen eine etwa gleich hohe konstante Temperatur einzustellen, wird vorteilhaft frisch gebildetes Reduktionsgas zum Teil den der in Reduktionsgas-Strömungsrichtung ersten Wirbelschicht-Reduktionszone folgenden einzelnen Wirbelschicht-Reduktionszonen zusätzlich jeweils direkt zugeführt, vorzugsweise in einer Menge von 5 bis 15 %. Eine Anlage zur Durchführung des Verfahrens mit einer Mehrzahl von hintereinander in Serie geschalteten Wirbelschicht-Reaktoren zur Aufnahme des eisenoxidhältigen Materials, wobei der für das eisenoxidhältige Material erste Wirbelschicht-Reaktor zur Vorwärmung des eisenoxidhältigen Materials vorgesehen ist und wobei das eisenoxidhältige Material von Wirbelschicht-Reaktor zu Wirbelschicht-Reaktor über Förderleitungen und das Reduktionsgas über Verbindungsleitungen im Gegenstrom zum eisenoxidhältigen Material geführt ist, mit einer Reduktionsgas-Zuleitung zum in Strömungsrichtung des eisenoxidhältigen Materials letzten Wirbelschicht-Reaktor, mit einem Reformer, einer vom Reformer ausgehenden Reformgasleitung, die mit einer das sich bei der Reduktion bildende Topgas abführenden Topgas-Ableitung zusammenmündet, wobei das aus reformiertem Gas und Topgas gebildete Reduktionsgas über die Reduktionsgas-Zuleitung in den für das eisenoxidhältige Material letzten Wirbelschicht-Reaktor gelangt, und mit einem CO₂-Wäscher ist dadurch gekennzeichnet, daß sowohl die Reformgasleitung als auch die Topgas-Ableitung in den CO₂-Wäscher münden, von dem die Reduktionsgas-Zuleitung ausgeht und daß eine Verbindungsleitung für Reduktionsgas in den in Strömungsrichtung des eisenoxidhältigen Materials ersten Wirbelschicht-Reaktor mündet und die Topgas-Ableitung vom ersten Wirbelschicht-Reaktor ausgeht.

Vorteilhaft münden in den in Reduktionsgas-Strömungsrichtung letztgeordneten Wirbelschicht-Reaktor zusätzlich zu der das aus dem vorgeordneten Wirbelschicht-Reaktor austretende Reduktionsgas zuführenden Leitung eine Sauerstoff-Zuführungsleitung und gegebenenfalls eine Erdgas-Zuführungsleitung.

Eine Konstanthaltung der Temperaturen in sämtlichen Wirbelschichtreaktoren in gleicher Höhe wird nach einer weiteren Ausführungsform dadurch erzielt, daß die Wirbelschichtreaktoren hinsichtlich der Reduktionsgasführung neben der Serienschaltung in bezug auf eine zusätzliche Reduktionsgas-Zuleitung in Parallelschaltung angeordnet sind.

Eine vorteilhafte Ausführungsform der Anlage umfaßt vier hintereinander in Serie geschaltete Wirbelschicht-Reaktoren.

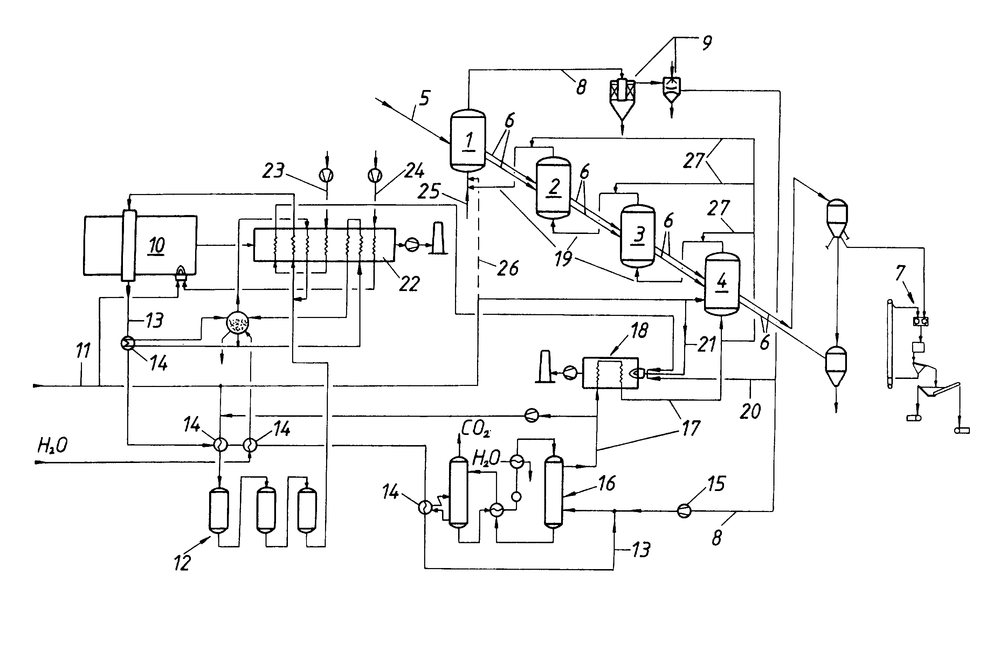

Die Erfindung ist nachfolgend anhand der Zeichnung, die ein Verfahrensschema nach einer bevorzugten Ausführungsform zeigt, näher erläutert.

Die erfindungsgemäße Anlage weist vier in Serie hintereinander geschaltete Wirbelschichtreaktoren 1 bis 4 auf, wobei eisenoxidhältiges Material, wie Feinerz, über eine Erzzuleitung 5 dem ersten Wirbelschichtreaktor 1 und von Wirbelschichtreaktor zu Wirbelschichtreaktor über Förderleitungen 6 geleitet und das fertig reduzierte Material (Eisenschwamm) in einer Brikettieranlage 7 heiß- oder kaltbrikettiert wird. Erforderlichenfalls wird das reduzierte Eisen vor Reoxidation während der Brikettierung durch ein nicht dargestelltes Inertgas-System geschützt.

Vor Einleitung des Feinerzes in den ersten Wirbelschichtreaktor wird es einer Erzvorbereitung, wie einer Trocknung und einem Sieben, unterzogen, die nicht näher dargestellt ist.

Reduktionsgas wird im Gegenstrom zum Erzdurchfluß von Wirbelschichtreaktor 4 zu Wirbelschichtreaktor 3 bis 1 geführt und als Topgas über eine Topgas-Ableitung 8 aus dem in Gasströmungsrichtung letzten Wirbelschichtreaktor 1 abgeleitet und in einem Naßwäscher 9 gekühlt und gewaschen. Die Herstellung des Reduktionsgases erfolgt durch Reformieren von über die Leitung 11 zugeführtem und in einer Entschwefelungsanlage 12 entschwefeltem Erdgas in einem Reformer 10. Das aus Erdgas und Dampf gebildete reformierte Gas besteht im wesentlichen aus H₂, CO, CH₄, H₂O und CO₂. Dieses reformierte Gas wird über die Reformgasleitung 13 mehreren Wärmetauschern 14 zugeleitet, in denen es auf Umgebungstemperatur abgekühlt wird, wodurch Wasser aus dem Gas auskondensiert wird.

Die Reformgasleitung 13 mündet in die Topgas-Ableitung 8, nachdem das Topgas mittels eines Kompressors 15 verdichtet wurde. Das so sich bildende Mischgas wird durch einen CO₂-Wäscher 16 hindurchgeschickt und von CO₂ befreit, und es steht nunmehr als Reduktionsgas zur Verfügung. Dieses Reduktionsgas wird über die Reduktionsgas-Zuleitung 17 in einem dem CO₂-Wäscher 16 nachgeordneten Gaserhitzer 18 auf eine Reduktionsgas-Temperatur von etwa 800°C erhitzt und dem in Gas-Durchflußrichtung ersten Wirbelschichtreaktor 4 zugeführt, wo es mit den Feinerzen zur Erzeugung von direkt reduziertem Eisen reagiert. Die Wirbelschichtreaktoren 4 bis 1 sind in Serie geschaltet; das Reduktionsgas gelangt über die Verbindungsleitungen 19 von Wirbelschichtreaktor zu Wirbelschichtreaktor.

Ein Teil des Topgases wird aus dem Gas-Kreislauf 8, 17, 19 ausgeschleust, um eine Anreicherung von Inertgasen, wie N₂, zu vermeiden. Das ausgeschleuste Topgas wird über eine Zweigleitung 20 dem Gaserhitzer 18 zur Erwärmung des Reduktionsgases zugeführt und dort verbrannt. Eventuell fehlende Energie wird durch Erdgas, welches über die Zuleitung 21 zugeführt wird, ergänzt.

Die fühlbare Wärme des aus dem Reformer 10 austretenden reformierten Gases sowie der Reformerrauchgase wird in einem Rekuperator 22 genutzt, um das Erdgas nach Durchlauf durch die Entschwefelungsanlage 12 vorzuwärmen, den für die Reformierung benötigten Dampf zu erzeugen sowie die dem Gaserhitzer über die Leitung zugeführte Verbrennungsluft sowie gegebenenfalls auch das Reduktionsgas vorzuwärmen. Die dem Reformer über die Leitung 24 zugeführte Verbrennungsluft wird ebenfalls vorgewärmt.

Um eine Temperaturabsenkung im in Erzdurchlaufrichtung ersten Wirbelschichtreaktor 1 zu vermeiden, kann es vorteilhaft sein, einen Teil des aus dem zweiten Wirbelschichtreaktor 2 austretenden Reduktionsgases im ersten Wirbelschichtreaktor zu verbrennen, zu welchem Zweck in den ersten Wirbelschichtreaktor eine Sauerstoff-Zuführungsleitung 25 und gegebenenfalls eine Erdgas-Zuführungsleitung 26 münden.

Um in sämtlichen Wirbelschichtreaktoren 1 bis 4 die Reaktionstemperatur auf gleicher Höhe konstant zu halten und hierdurch eine weitere Senkung des Energiebedarfes zu erzielen, wird heißes und frisches Reduktionsgas den Wirbelschichtreaktoren 1 bis 3, die dem in Reduktionsgas-Strömungsrichtung ersten Wirbelschichtreaktor 4 nachgeordnet sind, über Zweigleitungen 27 direkt zugeführt, u.zw. in einer Menge von etwa 10 % je Wirbelschichtreaktor 1, 2 und 3. Die Wirbelschichtreaktoren 1 bis 4 sind somit hinsichtlich der Reduktionsgasführung nicht nur in Serie, sondern, was die Zuführung eines geringen Teiles des Reduktionsgases betrifft, auch parallel geschaltet, wogegen die Wirbelschichtreaktoren 1 bis 4, was die Ab- bzw. Weiterleitung des Reduktionsgases betrifft, beim dargestellten Ausführungsbeispiel ausschließlich in Serie geschaltet sind.

Durch Verwendung von vier Wirbelschichtreaktoren 1 bis 4 zur Durchführung der Direktreduktion (unter Vermeidung eines Vorwärmreaktors) kommt es gegenüber dem Stand der Technik zu einer weiteren Senkung des Energiebedarfes und zu einer Minimierung von Staubverlusten.

### Beispiel:

In einer der Zeichnung entsprechenden Anlage mit einer stündlichen Leistung von 70 t/h heißbrikettiertem Eisen wurden 100 t/h Feinerz, 12.200 Nm³/h Erdgas mit 43.300 Nm³/h Dampf zu 76.600 Nm³/h reformiertem Gas umgesetzt. Die Reformierungstemperatur betrug 830°C, der Druck 18,5 bar. Die für die Unterfeuerung des Reformers benötigte Erdgasmenge betrug 6.200 Nm³/h.

Die Analyse der betreffenden Gase und des Feinerzes lautete:

| Erdgas [%] | | Reformiertes Gas [%] | Feinerz [%] |
|---|---|---|---|
| CH₄ | 83,4 | 2,30 | Fe₂O₃ 93,94 |
| CₙHₘ | 8,6 | -- | Gangart 1,84 |
| CO₂ | 8,0 | 10,70 | Rest: Glühverluste |
| CO | -- | 12,90 | |
| H₂ | -- | 68,90 | |
| O₂ | -- | -- | |
| N₂ | -- | 2,00 | |
| H₂S | 20 ppm | -- | |
| H₂O | -- | 3,20 | |

Das kalte reformierte Gas, 50.000 Nm³/h, wurde mit 145.000 Nm³/h rückgeführtem Topgas gemischt und in die CO₂-Wäsche geführt, wo es vom CO₂ befreit wurde. Das Gas, 182.000 Nm³/h, hatte folgende Analyse:

| | | bevorzugte Bereiche [%] | |
|---|---|---|---|
| | [%] | min. | max. |
| CH₄ | 16,29 | 8,00 | - 35,00 |
| CO₂ | 0,10 | 0,10 | - 3,50 |
| CO | 9,23 | 8,00 | - 35,00 |
| H₂ | 57,92 | 45,00 | - 75,00 |
| H₂O | 1,52 | 1,50 | - 5,00 |
| N₂ | 14,94 | 5,00 | - 35,00 |

Dieses Gas wurde in einem Gaserhitzer auf 800°C vorgewärmt. Dafür wurden ca. 5.500 Nm³/h Topgas und 4.600 Nm³/h Erdgas verbraucht.

Die Analyse des Topgases lautete:

| | [%] |
|---|---|
| CH₄ | 17,00 |
| CO₂ | 4,40 |
| CO | 4,90 |
| H₂ | 39,90 |
| H₂O | 18,90 |
| N₂ | 14,90 |

Das heißbrikettierte Eisen wies einen Metallisierungsgrad (Feₘₑₜ/Fe_{ges}) von 92 % auf.

## Patentansprüche

1. Verfahren zur Direktreduktion von teilchenförmigem eisenoxidhältigem Material im Wirbelschichtverfahren, wobei reformiertes Gas mit bei der Direktreduktion des eisenoxidhältigen Materials entstehendem Topgas vermischt und als Reduktionsgas einer Wirbelschicht-Reduktionszone zugeführt wird und wobei die Direktreduktion von eisenoxidhältigem Material in mehreren in Serie hintereinander geschalteten Wirbelschicht-Reduktionszonen durchgeführt wird und das Reduktionsgas im Gegenstrom zum teilchenförmigen, eisenoxidhältigen Material von Reduktionszone zu Reduktionszone geführt wird, wobei sowohl das Topgas als auch das reformierte Gas einer CO₂-Wäsche unterzogen werden, das Reduktionsgas auf einen H₂-Gehalt in einem Bereich zwischen 45 und 75%, vorzugsweise zwischen 50 und 65%, und einen CO-Gehalt in einem Bereich zwischen 8 und 35%, vorzugsweise zwischen 10 und 20%, eingestellt wird und zur Vorwärmung des eisenoxidhältigen Materials aus den nachgeordneten Wirbelschicht-Reduktionszonen stammendes Reduktionsgas durch die für das Material erste Wirbelschicht-Reduktionszone hindurchgeleitet wird.

2. Verfahren nach Anspruch 1, dadurch gekennzeichnet, daß das Einstellen des H₂- und CO-Gehalts im Reduktionsgas durch die Betriebsweise eines Reformers (10) erfolgt, wobei gegenüber herkömmlichen Reformer-Betriebsweisen ein reduziertes Dampf/Erdgas-Verhältnis, das vorzugsweise zwischen 2,5 und 3,5 liegt, eingehalten wird.

3. Verfahren nach Anspruch 1 oder 2, dadurch gekennzeichnet, daß das Reduktionsgas auf einen CH₄-Gehalt, der zwischen 8 und 35% liegt, eingestellt wird.

4. Verfahren nach einem oder mehreren der Ansprüche 1 bis 3, dadurch gekennzeichnet, daß das Reduktionsgas in der für das Reduktionsgas letzten Wirbelschicht-Reduktionszone einer Teilverbrennung durch Sauerstoffzufuhr unterzogen wird.

5. Verfahren nach einem oder mehreren der Ansprüche 1 bis 4, dadurch gekennzeichnet, daß frisch gebildetes Reduktionsgas zum Teil den der in Reduktionsgas-Strömungsrichtung ersten Wirbelschicht-Reduktionszone folgenden einzelnen Wirbelschicht-Reduktionszonen zusätzlich jeweils direkt zugeführt wird, vorzugsweise in einer Menge von 5 bis 15%.

6. Anlage zur Durchführung des Verfahrens nach einem oder mehreren der Ansprüche 1 bis 5 mit einer Mehrzahl von hintereinander in Serie geschalteten Wirbelschicht-Reaktoren (1 bis 4) zur Aufnahme des eisenoxidhältigen Materials, wobei der für das eisenoxidhältige Material erste Wirbelschicht-Reaktor (1) zur Vorwärmung des eisenoxidhältigen Materials vorgesehen ist und wobei das eisenoxidhältige Material von Wirbelschicht-Reaktor (1 bis 4) zu Wirbelschicht-Reaktor (1 bis 4) über Förderleitungen (6) und das Reduktionsgas über Verbindungsleitungen (19) im Gegenstrom zum eisenoxidhältigen Material geführt ist, mit einer Reduktionsgas-Zuleitung (17) zum in Strömungsrichtung des eisenoxidhältigen Materials letzten Wirbelschicht-Reaktor (4), mit einem Reformer (10), einer vom Reformer (10) ausgehenden Reformgasleitung (13), die mit einer das sich bei der Reduktion bildende Topgas abführenden Topgas-Ableitung (8) zusammenmündet, wobei das aus reformiertem Gas und Topgas gebildete Reduktionsgas über die Reduktionsgas-Zuleitung (17) in den für das eisenoxidhältige Material letzten Wirbelschicht-Reaktor (4) gelangt, und mit einem CO₂-Wäscher (16), dadurch gekennzeichnet, daß sowohl die Reformgasleitung (13) als auch die Topgas-Ableitung (8) in den CO₂-Wäscher (16) münden, von dem die Reduktionsgas-Zuleitung (17) ausgeht und daß eine Verbindungsleitung (19) für Reduktionsgas in den in Strömungsrichtung des eisenoxidhältigen Materials ersten Wirbelschicht-Reaktor (1) mündet und die Topgas-Ableitung (8) vom ersten Wirbelschicht-Reaktor (1) ausgeht.

7. Anlage nach Anspruch 6, dadurch gekennzeichnet, daß zumindest in den in Reduktionsgas-Strömungsrichtung letztgeordneten Wirbelschicht-Reaktor (1) zusätzlich zu der das aus dem vorgeordneten Wirbelschicht-Reaktor (2) austretende Reduktionsgas zuführenden Leitung (19) eine Sauerstoff-Zuführungsleitung (25) und gegebenenfalls eine Erdgas-Zuführungsleitung (26) münden.

8. Anlage nach Anspruch 6 oder 7, dadurch gekennzeichnet, daß die Wirbelschichtreaktoren (1 bis 3) hinsichtlich der Reduktionsgasführung neben der Serienschaltung in bezug auf eine zusätzliche Reduktionsgas-Zuleitung in Parallelschaltung angeordnet sind.

9. Anlage nach einem oder mehreren der Ansprüche 6 bis 8, dadurch gekennzeichnet, daß vier Wirbelschichtreaktoren hintereinander in Serie geschaltet vorgesehen sind.

## Claims

1. A process for the direct reduction of particulate iron-oxide-containing material by the fluidized bed method, wherein reformed gas is mixed with top gas forming in the direct reduction of the iron-oxide-containing material and is fed to a fluidized bed reduction zone as a reducing gas and wherein the direct reduction of iron-oxide-containing material is carried out in several fluidized bed reduction zones consecutively arranged in series and the reducing gas is conducted in counterflow to the particulate iron-oxide-containing material from one reduction zone to another reduction zone, wherein both the top gas and the reformed gas are subjected to CO₂ scrubbing, the reducing gas is adjusted to an H₂ content ranging between 45 and 75 %, preferably between 50 and 65 %, and a CO content ranging between 8 and 35 %, preferably between 10 and 20 %, and, for the purpose of preheating the iron-oxide-containing material, reducing gas coming from the consecutively arranged fluidized bed reduction zones is conducted through the fluidized bed reduction zone being the first for the material.

2. A process according to claim 1, characterized in that the adjustment of the H₂ and CO contents in the reducing gas is effected by the mode of operation of a reformer (10), wherein contrary to conventional reformer modes of operation a reduced vapour/natural gas ratio preferably ranging between 2.5 and 3.5 is observed.

3. A process according to claim 1 or 2, characterized in that the reducing gas is adjusted to a CH₄ content ranging between 8 and 35 %.

4. A process according to one or several of claims 1 to 3, characterized in that the reducing gas is subjected to partial combustion by oxygen supply in the fluidized bed reduction zone being the last for the reducing gas.

5. A process according to one or several of claims 1 to 4, characterized in that freshly formed reducing gas additionally is each directly supplied partially to the individual fluidized bed reduction zones following the first fluidized bed reduction zone in the flow direction of the reducing gas, preferably at an amount of from 5 to 15 %.

6. A plant for carrying out the process according to one or several of claims 1 to 5, comprising a plurality of fluidized bed reactors (1 to 4) consecutively arranged in series for receiving the iron-oxide-containing material, wherein the fluidized bed reactor (1) being the first for the iron-oxide-containing material is provided for preheating the iron-oxide-containing material and wherein the iron-oxide-containing material is conducted from one fluidized bed reactor (1 to 4) to another fluidized bed reactor (1 to 4) via conveyor ducts (6) and the reducing gas is conducted via connecting ducts (19) in counterflow to the iron-oxide-containing material, a reducing gas feed duct (17) leading to the fluidized bed reactor (4) being the last in the flow direction of the iron-oxide-containing material, a reformer (10), a reformed gas duct (13) departing from the reformer (10) and uniting with a top gas discharge duct (8) discharging the top gas forming during reduction, wherein the reducing gas formed of reformed gas and top gas via the reducing gas feed duct (17) gets into the fluidized bed reactor (4) being the last for the iron-oxide-containing material, and a CO₂ scrubber (16), characterized in that both the reformed gas duct (13) and the top gas discharge duct (8) run into the CO₂ scrubber (16) from which the reducing gas feed duct (17) departs, and that a connecting duct (19) for reducing gas runs into the fluidized bed reactor (1) being the first in the flow direction of the iron-oxide-containing material and the top gas discharge duct (8) departs from the first fluidized bed reactor (1).

7. A plant according to claim 6, characterized in that in addition to the duct (19) feeding the reducing gas emerging from the preceding fluidized bed reactor (2), an oxygen feed duct (25) and, if desired, a natural gas feed duct (26) run at least into the fluidized bed reactor (1) arranged last in the reducing gas flow direction.

8. A plant according to claim 6 or 7, characterized in that, in terms of reducing gas control, the fluidized bed reactors (1 to 3), besides being arranged in series, are arranged in parallel with regard to an additional reducing gas feed duct.

9. A plant according to one or several of claims 6 to 8, characterized in that four fluidized bed reactors are provided to be consecutively connected in series.

## Revendications

1. Procédé destiné à la réduction directe par procédé à lit fluidisé de matériau en forme de particules contenant de l'oxyde de fer, du gaz reformé étant mélangé avec du gaz de tête engendré lors de la réduction directe du matériau contenant de l'oxyde de fer, et étant amené en tant que gaz de réduction vers une zone de réduction à lit fluidisé, la réduction directe de matériau contenant de l'oxyde de fer étant effectuée dans plusieurs zones de réduction à lit fluidisé couplées en série les unes derrière les autres, et le gaz de réduction étant amené de zone de réduction en zone de réduction à contre-courant du matériau en forme de particules contenant de l'oxyde de fer, aussi bien le gaz de tête que le gaz reformé étant soumis a un lavage de CO₂, le gaz de réduction étant réglé à une teneur en H₂ située dans une plage comprise entre 45 et 75 %, de préférence entre 50 et 65 %, et à une teneur en CO située dans une plage comprise entre 8 et 35 %, de préférence entre 10 et 20 %, et du gaz de réduction provenant des zones de réduction à lit fluidisé situées en aval étant dirigé pour le préchauffage du matériau contenant de l'oxyde de fer à travers la première zone de réduction à lit fluidisé pour le matériau.

2. Procédé selon la revendication 1, caractérisé en ce que le réglage de la teneur en H₂ et en CO dans le gaz de réduction est effectué par le mode de fonctionnement d'un reformeur (10), étant précisé qu'en comparaison avec des modes de fonctionnement classiques de reformeurs, il est respecté un rapport de vapeur/gaz naturel réduit, qui se situe de préférence entre 2,5 et 3,5.

3. Procédé selon la revendication 1 ou 2, caractérisé en ce que le gaz de réduction est réglé à une teneur en CH₄ se situant entre 8 et 35 %.

4. Procédé selon l'une ou plusieurs des revendications 1 à 3, caractérisé en ce que, dans la dernière zone de réduction à lit fluidisé pour le gaz de réduction, le gaz de réduction est soumis à une combustion partielle par une alimentation en oxygène.

5. Procédé selon l'une ou plusieurs des revendications 1 à 4, caractérisé en ce qu'une partie du gaz de réduction nouvellement formé est en outre amenée directement aux différentes zones de réduction à lit fluidisé situées dans le sens de circulation du gaz de réduction en aval de la première zone de réduction à lit fluidisé, de préférence dans une quantité de 5 à 15 %.

6. Installation destinée à la mise en oeuvre du procédé selon l'une ou plusieurs des revendications 1 à 5, avec plusieurs réacteurs à lit fluidisé (1 à 4) couplés en série les uns derrière les autres pour la réception du matériau contenant de l'oxyde de fer, le premier réacteur à lit fluidisé (1) pour le matériau contenant de l'oxyde de fer étant prévu pour le préchauffage du matériau contenant de l'oxyde de fer, et le matériau contenant de l'oxyde de fer étant amené de réacteur à lit fluidisé (1 à 4) à réacteur à lit fluidisé (1 à 4) par l'intermédiaire de conduites d'amenée (6), et le gaz de réduction étant amené à contre-courant du matériau contenant de l'oxyde de fer par l'intermédiaire de conduites de liaison (19), avec une conduite d'amenée (17) de gaz de réduction vers le dernier réacteur à lit fluidisé (4) dans le sens de circulation du matériau contenant de l'oxyde de fer, avec un reformeur (10), une conduite (13) de gaz reformé partant du reformeur (10), qui débouche dans une conduite d'évacuation (8) de gaz de tête se formant lors de la réduction, le gaz de réduction constitué de gaz reformé et de gaz de tête arrivant par l'intermédiaire de la conduite d'amenée (17) de gaz de réduction dans le dernier réacteur à lit fluidisé (4) pour le matériau contenant de l'oxyde de fer, et avec un laveur de CO₂ (16), caractérisée en ce que, non seulement la conduite (13) de gaz reformé, mais aussi la conduite d'évacuation (8) de gaz de tête, débouchent dans le laveur de CO₂ (16), à partir duquel part la conduite d'amenée (17) de gaz de réduction, en ce qu'une conduite de liaison (19) de gaz de réduction débouche dans le premier réacteur à lit fluidisé (1) dans le sens de circulation du matériau contenant de l'oxyde de fer, et en ce que la conduite d'évacuation (8) de gaz de tête part du premier réacteur à lit fluidisé (1).

7. Installation selon la revendication 6, caractérisée en ce que, en plus de la conduite d'amenée (19) de gaz de réduction sortant du réacteur à lit fluidisé (2) disposé en amont, une conduite d'amenée (25) d'oxygène, et le cas échéant une conduite d'amenée (26) de gaz naturel, débouchent au moins dans le réacteur à lit fluidisé (1) disposé en dernier dans le sens de circulation du gaz de réduction.

8. Installation selon la revendication 6 ou 7, caractérisée en ce que, outre leur couplage en série, les réacteurs à lit fluidisé (1 à 3) sont disposés en ce qui concerne le cheminement du gaz de réduction en étant couplés en parallèle par rapport à une conduite d'amenée supplémentaire de gaz de réduction.

9. Procédé selon l'une ou plusieurs des revendications 6 à 8, caractérisé en ce qu'il est prévu quatre réacteurs à lit fluidisé couplés en série les uns derrière les autres.
